# EUROPEAN PATENT APPLICATION

(11) **EP 4 422 270 A1**
(43) Date of publication of application: **28.08.2024**
(21) Application number: 21960985.6
(22) Date of filing: 21.10.2021
(51) Int. Cl.: H04W 36/00

(54) **COMMUNICATION METHOD AND APPARATUS BASED ON MEASUREMENT RELAXATION MECHANISM, AND STORAGE MEDIUM**

(71) Applicant: Beijing Xiaomi Mobile Software Co., Ltd., Beijing 100085 (CN)
(72) Inventor: HU, Ziquan, Beijing 100085 (CN)
(74) Representative: Kudlek, Franz Thomas
(86) International application number: PCT/CN2021/125378
(87) International publication number: WO 2023/065236

(57) **Abstract**

The present invention relates to a communication method and apparatus based on a measurement relaxation mechanism, and a storage medium. The communication method based on the measurement relaxation mechanism is applied to a terminal, and comprises: determining a common measurement reference signal, the common measurement reference signal being a reference signal shared by radio resource management (RRM) measurement relaxation and communication link quality monitoring measurement relaxation; and performing measurement relaxation judgment on the RRM measurement relaxation and the communication link quality monitoring measurement relaxation on the basis of the common measurement reference signal. By means of the present invention, measurement relaxation judgment for determining the RRM measurement relaxation and the communication link quality monitoring measurement relaxation on the basis of the quality of the shared reference signal can be achieved, signaling overhead can be reduced, and concise and efficient cooperative measurement is achieved.

## Description

### TECHNICAL FIELD

The present disclosure relates to the field of communication technology, and in particular, to a method and apparatus for communication based on a measurement relaxation mechanism, and a storage medium.

### BACKGROUND

In the related art, a low-mobility measurement relaxation mechanism is introduced for a terminal in a connected state, such as radio resource management (RRM) measurement relaxation, radio link monitoring (RLM) measurement relaxation, beam failure detection (BFD) measurement relaxation, or the like.

Among them, the RRM measurement in the connected state is mainly for the measurement on a neighboring cell. When performing RRM measurement relaxation determination in the connected state, the signal quality of the reference signal for the current serving cell is used as the determination reference. Among them, the reference signal used for RRM measurement may be a synchronization signal/PBCH block (SSB) or a channel state information reference signal (CSI-RS). RLM measurement in the connected state is a measurement on downlink radio link quality monitoring performed by a UE in the connected state in an active part bandwidth (BWP); a network configures a reference signal set for the terminal to perform RLM measurement; and a reference signal in the reference signal set is referred to as an RLM-RS. The BFD measurement in the connected state is a measurement on downlink beam quality monitoring performed by the terminal in the connected state in the active BWP; the network configures a reference signal set for the terminal to perform BFD measurement; and a reference signal in the reference signal set is referred to as a BFD-RS. In the current protocol TS 38.331, the RLM-RS and BFD-RS configured by the network may be an SSB and/or a CSI-RS.

Both the RLM/BFD measurement relaxation and the RRM measurement relaxation may be performed based on a low-mobility determination criterion; that is, whether to perform relaxation is determined both based on the signal quality for a serving cell. However, in the related art, measurement evaluation needs to be performed for RRM measurement relaxation based on a reference signal configured for RRM, and measurement evaluation needs to be performed for RLM/BFD measurement relaxation based on a reference signal configured for RLM/BFD, so that signaling overheads are relatively larger.

### SUMMARY

In order to overcome the problems existing in the related art, the present disclosure provides a method and apparatus for communication based on a measurement relaxation mechanism, and a storage medium.

According to a first aspect of the embodiments of the present disclosure, there is provided a method for communication based on a measurement relaxation mechanism, applied to a terminal, including:
determining a common measurement reference signal, where the common measurement reference signal is a reference signal commonly used for radio resource management (RRM) measurement relaxation and communication link quality monitoring measurement relaxation; and performing measurement relaxation determination on the RRM measurement relaxation and the communication link quality monitoring measurement relaxation based on the common measurement reference signal.

In an embodiment, determining the common measurement reference signal comprises:
using, in response to using a same type of reference signal for the RRM measurement relaxation and the communication link quality monitoring measurement relaxation, a reference signal with a same signal index in the same type of reference signal as the common measurement reference signal.

In an embodiment, using the same type of reference signal for the RRM measurement relaxation and the communication link quality monitoring measurement relaxation, comprises at least one of: using a synchronization signal block for the RRM measurement relaxation, and using a synchronization signal block for the communication link quality monitoring measurement relaxation; using a channel state information reference signal for the RRM measurement relaxation, and using a channel state information reference signal for the communication link quality monitoring measurement relaxation; or using a synchronization signal block or a channel state information reference signal for the RRM measurement relaxation, and using a synchronization signal block and a channel state information reference signal for the communication link quality monitoring measurement relaxation.

In an embodiment, performing measurement relaxation determination on the RRM measurement relaxation and the communication link quality monitoring measurement relaxation based on the common measurement reference signal, comprises:
performing, in response to using a synchronization signal block for the RRM measurement relaxation and using a synchronization signal block for the communication link quality monitoring measurement relaxation, measurement relaxation determination on the RRM measurement relaxation and the communication link quality monitoring measurement relaxation based on a synchronization signal block with a same synchronization signal block index.

In an embodiment, performing measurement relaxation determination on the RRM measurement relaxation and the communication link quality monitoring measurement relaxation based on the common measurement reference signal, comprises:
performing, in response to using a channel state information reference signal for the RRM measurement relaxation and using a channel state information reference signal for the communication link quality monitoring measurement relaxation, measurement relaxation determination on the RRM measurement relaxation and the communication link quality monitoring measurement relaxation based on a channel state information reference signal with a same channel state information reference signal index.

In an embodiment, performing measurement relaxation determination on the RRM measurement relaxation and the communication link quality monitoring measurement relaxation based on the common measurement reference signal, includes:
performing, in response to using a synchronization signal block for the RRM measurement relaxation and using a synchronization signal block and a channel state information reference signal for the communication link quality monitoring measurement relaxation, measurement relaxation determination on the RRM measurement relaxation based on a synchronization signal block with a same synchronization signal block index, and performing measurement relaxation determination on the communication link quality monitoring measurement relaxation based on the channel state information reference signal and the synchronization signal block with the same synchronization signal block index; or
performing, in response to using a channel state information reference signal for the RRM measurement relaxation and using a synchronization signal block and a channel state information reference signal for the communication link quality monitoring measurement relaxation, measurement relaxation determination on the RRM measurement relaxation based on a channel state information reference signal with a same synchronization signal block index, and performing measurement relaxation determination on the communication link quality monitoring measurement relaxation based on the synchronization signal block and the channel state information reference signal with the same channel state information reference signal index.

In an embodiment, determining the common measurement reference signal, includes: receiving first indication information sent by a network device, where the first indication information is used to indicate the common measurement reference signal.

In an embodiment, the common measurement reference signal is determined based on an intersection between a reference signal set configured and used for the RRM measurement relaxation and a reference signal set configured and used for the communication link quality monitoring measurement relaxation; or the common measurement reference signal is a self-defined reference signal set.

In an embodiment, receiving the first indication information sent by the network device, includes:
receiving the first indication information sent by the network device based on dedicated radio resource control signaling; or receiving the first indication information sent by the network device based on a low-mobility relaxation criterion configuration parameter.

In an embodiment, the method for communication based on the measurement relaxation mechanism further includes: receiving second indication information, where the second indication information is used to indicate performing measurement relaxation determination on the RRM measurement relaxation and the communication link quality monitoring measurement relaxation by using the common measurement reference signal.

In an embodiment, the communication link quality monitoring measurement relaxation includes RLM measurement relaxation and/or beam failure detection (BFD) measurement relaxation.

According to a second aspect of the embodiments of the present disclosure, there is provided a method for communication based on a measurement relaxation mechanism, applied to a network device, including:
determining a common measurement reference signal, where the common measurement reference signal is a reference signal commonly used for radio resource management (RRM) measurement relaxation and communication link quality monitoring measurement relaxation; and sending first indication information, where the first indication information is used to indicate the common measurement reference signal.

In an embodiment, the common measurement reference signal is determined based on an intersection between a reference signal set configured and used for the RRM measurement relaxation and a reference signal set configured and used for the communication link quality monitoring measurement relaxation; or the common measurement reference signal is a self-defined reference signal set.

In an embodiment, sending the first indication information, includes: sending the first indication information based on dedicated radio resource control signaling; or sending the first indication information based on a low-mobility relaxation criterion configuration parameter.

In an embodiment, the method for communication based on the measurement relaxation mechanism further includes:
sending second indication information, where the second indication information is used to indicate performing measurement relaxation determination on the RRM measurement relaxation and the communication link quality monitoring measurement relaxation by using the common measurement reference signal.

In an embodiment, the communication link quality monitoring measurement relaxation includes RLM measurement relaxation and/or beam failure detection (BFD) measurement relaxation.

According to a third aspect of the embodiments of the present disclosure, there is provided an apparatus for communication based on a measurement relaxation mechanism, including:
a processing unit, configured to determine a common measurement reference signal, where the common measurement reference signal is a reference signal commonly used for radio resource management (RRM) measurement relaxation and communication link quality monitoring measurement relaxation, and perform measurement relaxation determination on the RRM measurement relaxation and the communication link quality monitoring measurement relaxation based on the common measurement reference signal.

In an embodiment, in response to using a same type of reference signal for the RRM measurement relaxation and the communication link quality monitoring measurement relaxation, the processing unit uses a reference signal with a same signal index in the same type of reference signal as the common measurement reference signal.

In an embodiment, using the same type of reference signal for the RRM measurement relaxation and the communication link quality monitoring measurement relaxation, includes at least one of the following: using a synchronization signal block for the RRM measurement relaxation, and using a synchronization signal block for the communication link quality monitoring measurement relaxation; using a channel state information reference signal for the RRM measurement relaxation, and using a channel state information reference signal for the communication link quality monitoring measurement relaxation; or using a synchronization signal block or a channel state information reference signal for the RRM measurement relaxation, and using a synchronization signal block and a channel state information reference signal for the communication link quality monitoring measurement relaxation.

In an embodiment, in response to using a synchronization signal block for the RRM measurement relaxation and using a synchronization signal block for the communication link quality monitoring measurement relaxation, the processing unit performs measurement relaxation determination on the RRM measurement relaxation and the communication link quality monitoring measurement relaxation based on a synchronization signal block with a same synchronization signal block index.

In an embodiment, in response to using a channel state information reference signal for the RRM measurement relaxation and using a channel state information reference signal for the communication link quality monitoring measurement relaxation, the processing unit performs measurement relaxation determination on the RRM measurement relaxation and the communication link quality monitoring measurement relaxation based on a channel state information reference signal with a same channel state information reference signal index.

In an embodiment, in response to using a synchronization signal block for the RRM measurement relaxation and using a synchronization signal block and a channel state information reference signal for the communication link quality monitoring measurement relaxation, the processing unit performs measurement relaxation determination on the RRM measurement relaxation based on a synchronization signal block with a same synchronization signal block index, and performs measurement relaxation determination on the communication link quality monitoring measurement relaxation based on the channel state information reference signal and the synchronization signal block with the same synchronization signal block index; or

In response to using a channel state information reference signal for the RRM measurement relaxation and using a synchronization signal block and a channel state information reference signal for the communication link quality monitoring measurement relaxation, the processing unit performs measurement relaxation determination on the RRM measurement relaxation based on a channel state information reference signal with a same synchronization signal block index, and performs measurement relaxation determination on the communication link quality monitoring measurement relaxation based on the synchronization signal block and the channel state information reference signal with the same channel state information reference signal index.

In an embodiment, the apparatus further includes a receiving unit;
the receiving unit is configured to receive first indication information sent by a network device, where the first indication information is used to indicate the common measurement reference signal; and the processing determines the common measurement reference signal based on the first indication information.

In an embodiment, the common measurement reference signal is determined based on an intersection between a reference signal set configured and used for the RRM measurement relaxation and a reference signal set configured and used for the communication link quality monitoring measurement relaxation; or the common measurement reference signal is a self-defined reference signal set.

In an embodiment, the receiving unit receives the first indication information sent by the network device based on dedicated radio resource control signaling; or the receiving unit receives the first indication information sent by the network device based on a low-mobility relaxation criterion configuration parameter

In an embodiment, the apparatus further includes a receiving unit; the receiving unit is configured to receive second indication information, where the second indication information is used to indicate performing measurement relaxation determination on the RRM measurement relaxation and the communication link quality monitoring measurement relaxation by using the common measurement reference signal.

In an embodiment, the communication link quality monitoring measurement relaxation includes RLM measurement relaxation and/or beam failure detection (BFD) measurement relaxation.

According to a fourth aspect of the embodiments of the present disclosure, there is provided an apparatus for communication based on a measurement relaxation mechanism, including:
a processing unit, configured to determine a common measurement reference signal, where the common measurement reference signal is a reference signal commonly used for radio resource management (RRM) measurement relaxation and communication link quality monitoring measurement relaxation; and a sending unit, configured to send first indication information, where the first indication information is used to indicate the common measurement reference signal

In an embodiment, the common measurement reference signal is determined based on an intersection between a reference signal set configured and used for the RRM measurement relaxation and a reference signal set configured and used for the communication link quality monitoring measurement relaxation; or the common measurement reference signal is a self-defined reference signal set.

In an embodiment, the sending unit sends the first indication information based on dedicated radio resource control signaling; or the sending unit sends the first indication information based on a low-mobility relaxation criterion configuration parameter.

In an embodiment, the sending unit is further configured to send second indication information, where the second indication information is used to indicate performing measurement relaxation determination on the RRM measurement relaxation and the communication link quality monitoring measurement relaxation by using the common measurement reference signal.

In an embodiment, the communication link quality monitoring measurement relaxation includes RLM measurement relaxation and/or beam failure detection (BFD) measurement relaxation.

According to a fifth aspect of the embodiments of the present disclosure, there is provided an apparatus for communication based on a measurement relaxation mechanism, including:
a processor; and a memory, configured to store an instruction executable by the processor;
where the processor is configured to perform the method for communication based on the measurement relaxation mechanism according to the first aspect or any one of the embodiments of the first aspect.

According to a sixth aspect of the embodiments of the present disclosure, there is provided an apparatus for communication based on a measurement relaxation mechanism, including:
a processor;
a memory, configured to store an instruction executable by the processor;
where the processor is configured to perform the method for communication based on the measurement relaxation mechanism according to the second aspect or any one of the embodiments of the second aspect.

According to a seventh aspect of the embodiments of the present disclosure, there is provided a storage medium, where the storage medium stores an instruction, and when the instruction in the storage medium is executed by a processor of a terminal, the terminal is enabled to perform the method for communication based on the measurement relaxation mechanism according to the first aspect or any one of the embodiments of the first aspect.

According to an eighth aspect of the embodiments of the present disclosure, there is provided a storage medium, where the storage medium stores an instruction, and when the instruction in the storage medium is executed by a processor of a network device, the network device is enabled to perform the method for communication based on the measurement relaxation mechanism according to the second aspect or any one of the embodiments of the second aspect.

The technical solutions provided in the embodiments of the present disclosure may include the following beneficial effects: measurement relaxation determination is performed on RRM measurement relaxation and communication link quality monitoring measurement relaxation based on a common measurement reference signal commonly used for RRM measurement relaxation and communication link quality monitoring measurement relaxation, so that measurement relaxation determination for determining RRM measurement relaxation and communication link quality monitoring measurement relaxation based on common reference signal quality can be achieved, thus signaling overheads can be reduced, and concise and efficient cooperative measurement can be achieved.

It is to be understood that both the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of the description, illustrate embodiments consistent with the disclosure and together with the description serve to explain the principles of the present disclosure.
FIG. 1 is a schematic diagram of a wireless communication system illustrated according to an example embodiment.
FIG. 2 is a flowchart of a method for communication based on a measurement relaxation mechanism illustrated according to an example embodiment.
FIG. 3 is a flowchart of a method for communication based on a measurement relaxation mechanism illustrated according to an example embodiment.
FIG. 4 is a flowchart of a method for communication based on a measurement relaxation mechanism illustrated according to an example embodiment.
FIG. 5 is a schematic diagram of an SSB index and signal quality for performing low-mobility measurement relaxation determination based on an SSB on RRM and RLM illustrated according to an example embodiment.
FIG. 6 is a flowchart of a method for communication based on a measurement relaxation mechanism illustrated according to an example embodiment.
FIG. 7 is a block diagram of an apparatus for communication based on a measurement relaxation mechanism illustrated according to an example embodiment.
FIG. 8 is a block diagram of an apparatus for communication based on a measurement relaxation mechanism illustrated according to an example embodiment.
FIG. 9 is a block diagram of an apparatus for communication based on a measurement relaxation mechanism illustrated according to an example embodiment.
FIG. 10 is a block diagram of an apparatus for communication based on a measurement relaxation mechanism illustrated according to an example embodiment.

### DETAILED DESCRIPTION

Descriptions will now be made in detail to example embodiments, examples of which are illustrated in the accompanying drawings. The following description refers to the accompanying drawings in which the same numbers in different drawings represent the same or similar elements unless otherwise represented. The embodiments described in the following example embodiments do not represent all embodiments consistent with the present disclosure.

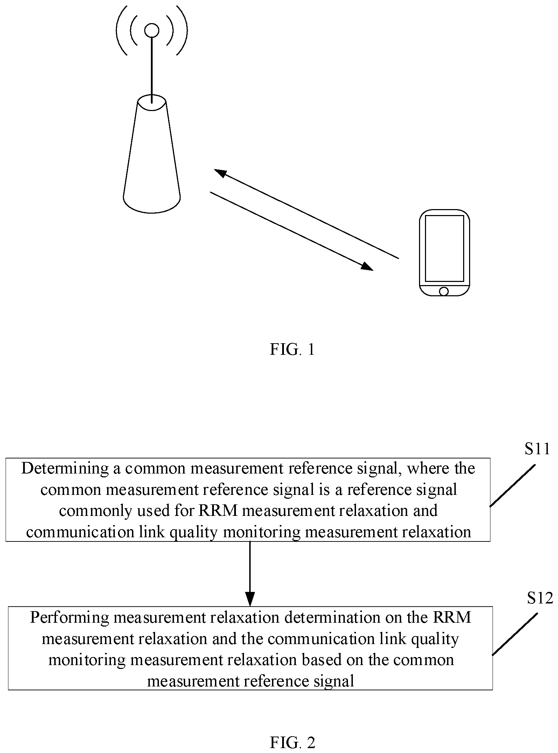

The method for communication based on the measurement relaxation mechanism provided in the embodiments of the present disclosure may be applied to the wireless communication system shown in FIG. 1. Referring to FIG. 1, the wireless communication system includes a terminal and a network device. Information transmission and reception are performed between the terminal and the network device by using a radio resource.

It may be understood that the wireless communication system shown in FIG. 1 is merely an example for description, and the wireless communication system may further include other network devices. For example, the wireless communication system may further include a core network device, a wireless relay device, a wireless backhaul device, or the like, which are not shown in FIG. 1. The number of network devices and the number of terminals included in the wireless communication system are not limited in the embodiments of the present disclosure.

It may be further understood that, the wireless communication system in the embodiments of the present disclosure is a network that provides a wireless communication function. The wireless communication system may adopt different communication technologies, such as Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), Carrier Sense Multiple Access with Collision Avoidance. A network may be classified into a 2G (Generation) network, a 3G network, a 4G network, or a future evolved network, such as a 5G network, according to factors such as capacity, rate, and latency of different networks. The 5G network may also be referred to as a new radio (NR) network. For ease of description, a wireless communication network may be sometimes referred to as a network for short in the present disclosure.

Furthermore, the network device involved in the present disclosure may also be referred to as a wireless access network device. The wireless access network device may be a base station, an evolved NodeB (eNB), a home NodeB, an access point (AP) in a wireless fidelity (WiFi) system, a wireless relay node, a wireless backhaul node, a transmission point (TP), or a transmission and reception point (TRP), etc.; the wireless access network device may also be a gNB in an NR system, or may also be a part of devices or a component that forms a base station, etc. When the communication system is a Vehicle to Everything (V2X) communication system, the network device may also be a vehicle-mounted device. It should be understood that, the specific technology and the specific device form used by the network device are not limited in the embodiments of the present disclosure.

Furthermore, the terminal involved in the present disclosure may also be referred to as a terminal device, user equipment (UE), a mobile station (MS), a mobile terminal (MT), etc., which is a device for providing voice and/or data connectivity to a user; for example, the terminal may be a handheld device having a wireless connection function, a vehicle-mounted device, etc. Currently, some examples of the terminal include a mobile phone, a pocket personal computer (PPC), a palm computer, a personal digital assistant (PDA), a notebook computer, a tablet computer, a wearable device, or a vehicle-mounted device, etc. In addition, when the communication system is a Vehicle to Everything (V2X) communication system, the terminal device may also be a vehicle-mounted device. It should be understood that the specific technology and the specific device form used by the terminal are not limited in the embodiments of the present disclosure.

In the related art, in order to save power consumption of a terminal, in Rel-16 version, an RRM measurement relaxation mechanism is introduced to a terminal in an idle state. Among them, in the measurement relaxation mechanism, communication is performed mainly based on a measurement relaxation determination criterion. In the related art, the measurement relaxation criterion includes a low-mobility determination criterion.

Among them, the low-mobility determination criterion refers to that when the difference between the received signal strength for reference (SrxlevRef) and the signal strength of the current serving cell of the terminal (Srxlev) is less than a preset threshold (SSearchDeltaP) within a certain duration (TSearchDeltaP), which represents that the signal change amplitude of the terminal is not significant, it is considered that the terminal is currently with low mobility. Among them, the parameters of SSearchDeltaP and TSearchDeltaP are provided by the network, and the formula is agreed by the protocol.

Among them, the low-mobility determination criterion in the protocol of TS 38.304 is described as follows.

### Relaxation measurement criterion for UE with low mobility

If the UE meets that (SrxlevRef - Srxlev) < SSearchDeltaP, it is considered that the UE meets the low-mobility criterion, where:
(The relaxed measurement criterion for UE with low-mobility is fulfilled when:
- (SrxlevRef - Srxlev) < SSearchDeltaP,
   where:)
   - Srxlev is the signal quality (dB) of the current serving cell (Srxlev = current Srxlev value of the serving cell (dB)).
   - Srxlevref is the reference signal quality (dB) of the serving cell (Srxlevref = reference Srxlev Value of the serving cell (dB)), if:
      cell selection or reselection is performed (after selecting or reselecting a new cell), or
      (Srxlev - SrxlevRef) > 0, or
      if the above inequation is not met with the duration of TSearchDeltaP (if the relaxed measurement criterion has not been met for TSearchDeltaP),
      updating SrxlevRef as the signal quality of the current serving cell of the UE (the UE shall set the value of SrxlevRef to the current Srxlev value of the serving cell).

At present, in the Rel-17 version of 3GPP, a higher-level measurement relaxation criterion is introduced, and the RRM measurement relaxation is also introduced into a connected state. The RRM measurement in the connected state is mainly for measurement of a neighboring cell. When the RRM measurement relaxation determination in the connected state is performed, in the current low-capability terminal (RedCap) project of R17, it is considered to continue to use the RRM measurement relaxation low-mobility determination criterion in the idle state of R16, and to use the signal quality of the reference signal of the current serving cell as the determination reference during performing determination. Among them, the reference signal for RRM measurement may be an SSB or a CSI-RS.

In the related art, a communication link quality monitoring measurement relaxation such as RLM measurement relaxation and BFD measurement relaxation is further introduced to the measurement relaxation mechanism in the connected state. Among them, the RLM measurement relaxation is a measurement of downlink radio link quality monitoring performed by the terminal in the connected state in the active BWP. The network configures a reference signal set for the terminal to perform RLM measurement, and a reference signal in the reference signal set is referred to as an RLM-RS. Among them, the number of RLM-RSs is configured based on a frame 1 (FR1) or a frame 2 (FR2). Among them, FR1 and FR2 are divided based on a frequency of 6GHz; a frame < 6 GHz is FR1; and a frame > 6 GHz is FR2. The number of configured RLM-RSs is at most: 2, under the condition of FR1≤3 GHz; 4, under the condition of FR1>3GHz; or 8, in FR2. The BFD measurement relaxation is a measurement of downlink beam quality monitoring performed by the terminal in the connected state in the active BWP. The network configures a reference signal set for the UE to perform BFD measurement. A reference signal in the reference signal set is referred to as a BFD-RS, and at most two reference signals are configured.

In the current protocol of TS 38.331, the terminal receives the RLM-RS and the BFD-RS configured by the NR network, which may be an SSB and/or a CSI-RS. The reference signal for RRM measurement in the NR network received by the terminal may be an SSB or a CSI-RS.

In the related art, the network configures a reference signal resource set for RRM measurement based on an SSB or a CSI-RS through a radio resource control signaling (RRC) message. The network configures a reference signal resource set for RLM and/or BFD measurement through an RRC message.

Both RLM/BFD measurement relaxation and RRM measurement relaxation may be based on the low-mobility determination criterion. In other words, it may be determined whether to perform relaxation based on the signal quality of the serving cell both in RLM/BFD measurement relaxation and RRM measurement relaxation. Therefore, for RLM/BFD measurement relaxation and RRM measurement relaxation, when the measurement relaxation determination is performed based on the signal quality of the serving cell, it is needed to evaluate two sets of measurement reference signals respectively in the current solution. Measurement and evaluation are performed for RRM measurement relaxation based on the reference signal configured for RRM, and measurement and evaluation are performed for RLM/BFD measurement relaxation based on the reference signal configured for RLM/BFD, in which signaling overheads are relatively larger.

In view of this, there is provided a method for communication based on a measurement relaxation mechanism according to embodiments of the present disclosure. The method for communication is based on a reference signal commonly used for RRM measurement relaxation and communication link quality monitoring measurement relaxation such as RLM/BFD measurement relaxation; and based on the commonly used reference signal, measurement relaxation determination is performed on RRM measurement relaxation and communication link quality monitoring measurement relaxation.

Among them, in the embodiments of the present disclosure, the reference signal commonly used for RRM measurement relaxation and communication link quality monitoring measurement relaxation is referred to as a common measurement reference signal.

It may be understood that the communication link quality monitoring measurement relaxation involved in the embodiments of the present disclosure may be RLM measurement relaxation and/or BFD measurement relaxation. That is, it may be RLM measurement relaxation; it may also be BFD measurement relaxation; or it may also be RLM measurement relaxation and BFD measurement relaxation.

FIG. 2 is a flowchart of a method for communication based on a measurement relaxation mechanism illustrated according to an example embodiment. As shown in FIG. 2, the method for communication based on the measurement relaxation mechanism is applied to a terminal, and included the following steps.

In step S11, a common measurement reference signal is determined, where the common measurement reference signal is a reference signal commonly used for RRM measurement relaxation and communication link quality monitoring measurement relaxation.

In step S12, measurement relaxation determination is performed on RRM measurement relaxation and communication link quality monitoring measurement relaxation based on the common measurement reference signal.

In the embodiments of the present disclosure, the determined common measurement reference signal may be an SSB and/or a CSI-RS.

Based on the common measurement reference signal, performing measurement relaxation determination on RRM measurement relaxation and communication link quality monitoring measurement relaxation, may be understood as performing determination based on a measurement result of the same group of reference signals (such as, a reference signal receiving power (RSRP)) when performing low-mobility relaxation determination criterion for a terminal simultaneously supporting RRM measurement relaxation and communication link quality monitoring measurement relaxation such as RLM/BFD.

In the embodiments of the present disclosure, measurement relaxation determination is performed on RRM measurement relaxation and communication link quality monitoring measurement relaxation based on a common measurement reference signal commonly used for RRM measurement relaxation and communication link quality monitoring measurement relaxation, so that measurement relaxation determination for determining RRM measurement relaxation and communication link quality monitoring measurement relaxation based on common reference signal quality can be achieved, thus signaling overheads can be reduced, and concise and efficient cooperative measurement can be achieved.

In the following, performing the method for communication based on the measurement relaxation mechanism based on a common measurement reference signal will be described in the embodiments of the present disclosure.

In an embodiment of the present disclosure, the common measurement reference signal is determined based on a measurement of the terminal. In another embodiment, the common measurement reference signal is determined based on an indication of the network.

Firstly, an embodiment of determining the common measurement reference signal based on the measurement of the terminal is described.

In the embodiments of the present disclosure, when determining the common measurement reference signal based on the measurement of the terminal, it may be determined based on the type of reference signal used for RRM measurement relaxation and the type of reference signal used for communication link quality monitoring measurement relaxation.

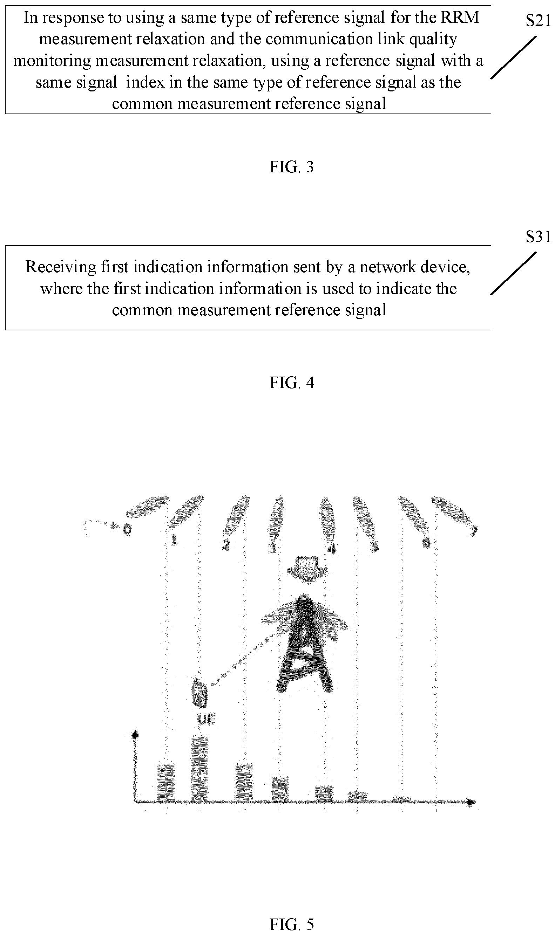

FIG. 3 is a flowchart of a method for communication based on a measurement relaxation mechanism illustrated according to an example embodiment. The method for communication based on the measurement relaxation mechanism may be implemented alone or in combination with other embodiments. As shown in FIG. 3, the method for communication based on the measurement relaxation mechanism is applied to a terminal, and includes the following steps.

In step S21, in response to using a same type of reference signal for the RRM measurement relaxation and the communication link quality monitoring measurement relaxation, a reference signal with a same signal index in the same type of reference signal is used as the common measurement reference signal.

In the embodiments of the present disclosure, on the one hand, the type of reference signal used for RRM measurement relaxation may be configured by the network. The terminal determines the type of reference signal used for RRM measurement relaxation when performing the RRM measurement. On the other hand, the type of reference signal used for communication link quality monitoring measurement relaxation may be configured by the network. The terminal determines the type of reference signal used for communication link quality monitoring measurement relaxation when performing communication link quality monitoring measurement.

Among them, in the embodiments of the present disclosure, the type of reference signal used for RRM measurement relaxation may include an SSB or a CSI-RS, and the type of reference signal used for communication link quality monitoring measurement relaxation may include at least one of an SSB and a CSI-RS.

In an embodiment, using the same type of reference signal for RRM measurement relaxation and communication link quality monitoring measurement relaxation, includes at least one of the following.
A: the reference signal used for RRM measurement relaxation is an SSB, the reference signal used for communication link quality monitoring measurement relaxation is an SSB, and the same type of reference signal is an SSB.
B: the reference signal used for RRM measurement relaxation is a CSI-RS, the reference signal used for communication link quality monitoring measurement relaxation is a CSI-RS, and the same type of reference signal is a CSI-RS.
C: the reference signal used for RRM measurement relaxation is an SSB or a CSI-RS, the reference signal used for communication link quality monitoring measurement relaxation is an SSB and a CSI-RS, and the same type of reference signal is an SSB or a CSI-RS.

In the embodiments of the present disclosure, based on the same type of reference signal that is determined, a reference signal including a same signal index in the same type of reference signal is further determined, so as to use the reference signal with the same signal index in the same type of reference signal as the common measurement reference signal.

For example, the same type of reference signal is an SSB, and the SSB with an SSB index commonly used for RRM measurement relaxation and communication link quality monitoring measurement relaxation is used as the common measurement reference signal.

For another example, the same type of reference signal is a CSI-RS, and the CSI-RS with an SSB index commonly used for RRM measurement relaxation and communication link quality monitoring measurement relaxation is used as the common measurement reference signal.

In the embodiments of the present disclosure, when performing RRM measurement relaxation, the measurement relaxation determination is performed based on the common measurement reference signal. When performing communication link quality monitoring measurement relaxation such as RLM and/or BFD, the measurement relaxation determination is performed based on the common measurement reference signal. That is, the measurement relaxation determination is performed based on the same measurement reference signal for RRM measurement relaxation and communication link quality monitoring measurement relaxation such as RLM and/or BFD, so as to save signaling overheads.

In an embodiment, in response to using an SSB for RRM measurement relaxation and using an SSB for communication link quality monitoring measurement relaxation, the same reference signal used for RRM measurement relaxation and communication link quality monitoring measurement relaxation is the SSB with a same SSB index. The terminal performs measurement relaxation determination on RRM measurement relaxation and communication link quality monitoring measurement relaxation based on the SSB with the same SSB index. In an example, if RRM and communication link quality monitoring are both based on an SSB as the measurement reference signal, the terminal determines the SSB index commonly used for communication link quality monitoring measurement and RRM measurement in the SSB, and uses a common SSB index measurement result as a basis for determining whether the terminal enters RRM low-mobility relaxation and communication link quality monitoring low-mobility relaxation.

In an embodiment, in response to using a CSI-RS for RRM measurement relaxation and using a CSI-RS for communication link quality monitoring measurement relaxation, the same reference signal used for RRM measurement relaxation and communication link quality monitoring measurement relaxation is the CSI-RS with a same CSI-RS index. The terminal performs measurement relaxation determination on RRM measurement relaxation and communication link quality monitoring measurement relaxation based on the CSI-RS with the same CSI-RS index. In an example, if RRM and communication link quality monitoring are both based on a CSI-RS as the measurement reference signal, the terminal determines the CSI-RS commonly used for communication link quality monitoring and RRM measurement in the CSI-RS, and uses a common CSI-RS index measurement result as a basis for determining whether the terminal enters RRM low-mobility relaxation and communication link quality monitoring low-mobility relaxation.

In an embodiment, in response to using an SSB for RRM measurement relaxation and using an SSB and a CSI-RS for communication link quality monitoring measurement relaxation, the same reference signal used for RRM measurement relaxation and communication link quality monitoring measurement relaxation is the SSB with a same SSB index. The terminal performs measurement relaxation determination on RRM measurement relaxation based on the SSB with the same SSB index, and performs measurement relaxation determination on communication link quality monitoring measurement relaxation based on the CSI-RS and the SSB with the same SSB index. In other words, if the network configures that the terminal performs RRM measurement relaxation based on an SSB, RRM measurement relaxation determination is performed based on the SSB with the same SSB index as the SSB used for communication link quality monitoring measurement relaxation. If the terminal performs communication link quality monitoring measurement relaxation, and the network configures that the terminal performs measurement based on an SSB and a CSI-RS, in addition to performing communication link quality monitoring measurement relaxation determination based on the SSB with the same SSB index as the SSB used for RRM measurement relaxation, the terminal further needs to perform communication link quality monitoring measurement relaxation determination by using the CSI-RS.

Alternatively, in another embodiment, in response to using a CSI-RS for RRM measurement relaxation and using an SSB and a CSI-RS for communication link quality monitoring measurement relaxation, the same reference signal used for RRM measurement relaxation and communication link quality monitoring measurement relaxation is the CSI-RS with the same CSI-RS index. The terminal performs measurement relaxation determination on the RRM measurement relaxation based on the CSI-RS with the same SSB index, and performs measurement relaxation determination on communication link quality monitoring measurement relaxation based on the SSB and the CSI-RS with the same CSI-RS index. In other words, if the network configures that the terminal performs RRM measurement relaxation based on a CSI-RS, RRM measurement relaxation determination is performed based on the CSI-RS with the same CSI-RS index as the CSI-RS used for communication link quality monitoring measurement relaxation. If the network configures that the terminal performs communication link quality monitoring measurement relaxation based on an SSB and a CSI-RS, in addition to performing communication link quality monitoring measurement relaxation determination based on the CSI-RS with the same CSI-RS index as the CSI-RS used for RRM measurement relaxation, the terminal further needs to perform communication link quality monitoring measurement relaxation determination by using the SSB.

In an example, for the case that communication link quality monitoring is based on an SSB and a CSI-RS as reference signals at the same time, according to the type of reference signal for RRM measurement, for the reference signal with a same type as the type of reference signal for RRM measurement and with a common index, low-mobility relaxation determination is performed at this time by using a measurement result of the common index for communication link quality monitoring and RRM.

It may be understood that, the foregoing embodiments of the present disclosure can be implemented depending on that there is a reference signal with a same type of reference signal and with a same signal index in the reference signal configured for RRM measurement relaxation and communication link quality monitoring measurement relaxation. In an embodiment, if there is no reference signal with a same type of reference signal and/or with a same signal index in the reference signal configured for RRM measurement relaxation and communication link quality monitoring measurement relaxation, measurement relaxation determination is performed on RRM measurement relaxation and communication link quality monitoring measurement relaxation respectively according to the corresponding configured type of reference signal.

An implementation process of determining the common measurement reference signal based on an indication of the network is described below in the embodiments of the present disclosure.

In the embodiments of the present disclosure, the network device may send indication information to the terminal, so as to indicate a measurement reference signal commonly used for the terminal to perform RRM measurement relaxation and communication link quality monitoring measurement relaxation. For ease of description, the indication information that is sent by the network device and is used to indicate the common measurement reference signal is referred to as first indication information.

FIG. 4 is a flowchart of a method for communication based on a measurement relaxation mechanism illustrated according to an example embodiment. The method for communication based on the measurement relaxation mechanism may be implemented alone or in combination with other embodiments. As shown in FIG. 4, the method for communication based on the measurement relaxation mechanism is applied to a terminal, and includes the following steps.

In step S31, first indication information sent by a network device is received, where the first indication information is used to indicate the common measurement reference signal.

In the embodiments of the present disclosure, the terminal receives the first indication information sent by the network device, and uses the reference signal indicated by the first indication information as the common measurement reference signal.

In the embodiments of the present disclosure, the common measurement reference signal indicated by the first indication information may be a reference signal set. The reference signal set includes one or more reference signals.

In an embodiment, the common measurement reference signal is determined based on an intersection between a reference signal set configured and used for RRM measurement relaxation and a reference signal set configured and used for communication link quality monitoring measurement relaxation. For example, the network device determines an intersection between a reference signal set used for RRM measurement relaxation and a reference signal set configured and used for communication link quality monitoring measurement relaxation as the common measurement reference signal. In another embodiment, the common measurement reference signal is a self-defined reference signal set. For example, the network device autonomously configures a group of reference signals as the common measurement reference signal.

In an aspect of the embodiments of the present disclosure, the first indication information may be carried in dedicated RRC, and the terminal receives the first indication information sent by the network device based on the dedicated RRC signaling. On the other hand, the first indication information may also be configured to the terminal together with a low-mobility relaxation criterion configuration parameter, and the terminal receives the first indication information sent by the network device based on the low-mobility relaxation criterion configuration parameter.

In the implementation solution of performing measurement relaxation determination on RRM measurement relaxation and communication link quality monitoring measurement relaxation based on the common measurement reference signal provided in the embodiments of the present disclosure, it may be determined, through the indication information sent by the network, whether to perform. The indication information is referred to as second indication information below, and the second indication information is used to indicate performing measurement relaxation determination on RRM measurement relaxation and communication link quality monitoring measurement relaxation by using the common measurement reference signal. Among them, the second indication information may be understood as a flag indication configured by the network device, to indicate whether the terminal is allowed to perform determination on RRM and BFD low-mobility measurement relaxation by using the common reference signal.

In an embodiment, the terminal receives the second indication information, and uses the common measurement reference signal to perform measurement relaxation determination on RRM measurement relaxation and communication link quality monitoring measurement relaxation. In another embodiment, the terminal does not receive the second indication information, and performs measurement relaxation determination on RRM measurement relaxation by using the RRM-RS, and performs measurement relaxation determination on communication link quality monitoring measurement relaxation by using the reference signal corresponding to the communication link quality monitoring measurement relaxation.

It may be understood that the communication link quality monitoring measurement relaxation involved in the foregoing embodiments of the present disclosure includes RLM measurement relaxation and/or BFD measurement relaxation. In other words, in the embodiments of the present disclosure, measurement relaxation determination may be performed on RLM measurement relaxation and RRM measurement relaxation by using a common measurement reference signal, or measurement relaxation determination may be performed on BFD measurement relaxation and RRM measurement relaxation by using a common measurement reference signal, or measurement relaxation determination may be performed on RLM measurement relaxation, BFD measurement relaxation and RRM measurement relaxation by using a common measurement reference signal.

It is illustrated described by taking that communication link quality monitoring measurement relaxation includes RLM measurement relaxation and communication link quality monitoring measurement relaxation includes BFD measurement relaxation as an example respectively.

Firstly, RLM measurement relaxation and RRM measurement relaxation are described.

### Solution 1: Measurement of Terminal

(1) If both RRM and RLM are based on an SSB as the measurement reference signal, the terminal determines an SSB index commonly used for RLM and RRM measurement in the SSB, and uses a common SSB index measurement result as a basis for determining whether the terminal enters RRM and RLM low-mobility relaxation.
(2) If both RRM and RLM are based on a CSI-RS as the measurement reference signal, the terminal determines a CSI-RS commonly used for RLM and RRM measurement in the CSI-RS, and uses a common CSI-RS Index measurement result as a basis for determining whether the terminal enters RRM and RLM Low-Mobility relaxation.
(3) If RLM is based on an SSB and a CSI-RS as the reference signal at the same time, according to the type of reference signal for RRM measurement, for the reference signals with a same type and with a common index, relaxation determination is performed on RLM and RRM by using a common index measurement result at this time.
(4) If RRM and RLM are based on completely different types of reference signals, it is respectively determined, according to a corresponding type of reference signal, whether to relax.

For this solution, the network may indicate, through a flag, whether the terminal is allowed to perform determination on RRM and RLM low-mobility measurement relaxation by using the common reference signal.

### Solution 2: Indication of Network

The network indicates the reference signal used for the terminal to perform determination on low-mobility criterion, which is denoted as Common-RS and is also used for determination on RRM and RLM measurement relaxation.

Among them, the common-RS may be an intersection of RLM-RS and RRM-RS, or a group of reference signals autonomously configured by the network.

Furthermore, the common-RS indication may be issued to the terminal through dedicated RRC signaling, or may be configured to the terminal with a parameter of the low-mobility relaxation criterion.

For the above implementation process of performing determination on RRM and RLM low-mobility measurement relaxation based on the measurement reference signal with a same index, reference may be made to FIG. 5. FIG. 5 is a schematic diagram of an SSB index and signal quality for performing low-mobility measurement relaxation determination on RRM and RLM based on an SSB. Referring to FIG. 5, the SSB index includes {0, 1, 2, 3, 4, 5, 6, 7}, and there are eight SSB indexes. The network device configures the SSB index used for RRM measurement as {0, 1, 2} through the bitmap of "11111000". The reference signal configured for RLM measurement by the network device is {0, 1, 2}.

In a solution, the terminal performs measurement based on a common index, that is, {0, 1, 2}, and the related measurement result is used as a basis for whether RRM and RLM are in low-mobility relaxation. In another solution, when issuing the low-mobility criterion parameter, the network issues the reference signal set {0, 1, 2} for measurement at the same time to indicate the reference signal for related measurement to the terminal.

Secondly, BFD measurement relaxation and RRM measurement relaxation are described.

### Solution 1: Measurement of Terminal

(1) If both RRM and BFD are based on an SSB as the measurement reference signal, the terminal determines an SSB index commonly used for BFD and RRM measurement in the SSB, and uses a common SSB index measurement result as a basis for determining whether the terminal enters RRM and BFD low-mobility relaxation.
(2) If both RRM and BFD are based on a CSI-RS as the measurement reference signal, the terminal determines a CSI-RS commonly used for BFD and RRM measurement in the CSI-RS, and uses a common CSI-RS index measurement result as a basis for determining whether the terminal enters RRM and BFD low-mobility relaxation.
(3) If BFD is based on an SSB and a CSI-RS as the reference signal at the same time, according to the type of reference signal for BFD measurement, for the reference signal with a same type and with a common index, relaxation determination is performed on BFD and RRM by using a common index measurement result at this time.
(4) If RRM and the BFD are based on completely different types of reference signals, it is respectively determined, according to a corresponding type of reference signal, whether to relax.

For this solution, the network may indicate, through a flag, whether the terminal is allowed to perform determination on RRM and BFD low-mobility measurement relaxation by using the common reference signal.

### Solution 2: Indication of Network

The network indicates the reference signal used for the terminal to perform determination on low-mobility criterion, which is denoted as Common-RS and is also used for determination on RRM and BFD measurement relaxation.

The common-RS may be an intersection of BFD-RS and RRM-RS, or a group of reference signals autonomously configured by the network.

Among them, the common-RS indication may be issued to the terminal through dedicated RRC signaling, or may be configured to the terminal with a parameter of the low-mobility relaxation criterion.

In the foregoing method for communication based on the measurement relaxation mechanism provided in the embodiments of the present disclosure, according to the solution of performing determination on RLM/BFD and RRM low-mobility relaxation criterion coordinately, determination may be performed on RRM and RLM, or on RRM and BFD low-mobility criterion, at the same time based on the same set of reference signal quality, thus concise and efficient cooperative measurement is achieved.

Based on the same concept, there is further provided a method for communication based on a measurement relaxation mechanism applied to a network device according to an embodiment of the present disclosure.

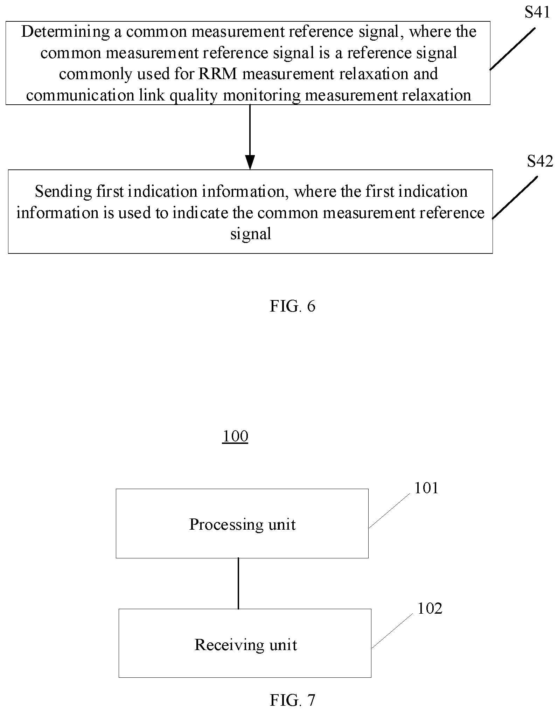

FIG. 6 is a flowchart of a method for communication based on a measurement relaxation mechanism illustrated according to an example embodiment. The method for communication based on the measurement relaxation mechanism may be implemented alone or in combination with other embodiments. As shown in FIG. 6, the method for communication based on the measurement relaxation mechanism is applied to a network device, and includes the following steps.

In step S41, a common measurement reference signal is determined, where the common measurement reference signal is a reference signal commonly used for RRM measurement relaxation and communication link quality monitoring measurement relaxation.

In step S42, first indication information is sent, where the first indication information is used to indicate the common measurement reference signal.

The common measurement reference signal indicated by the first indication information in the embodiments of the present disclosure may be a reference signal set. The reference signal set includes one or more reference signals.

In an embodiment, the common measurement reference signal is determined based on an intersection between a reference signal set configured and used for RRM measurement relaxation and a reference signal set configured and used for communication link quality monitoring measurement relaxation. For example, the network device determines an intersection between a reference signal set used for RRM measurement relaxation and a reference signal set configured and used for communication link quality monitoring measurement relaxation as the common measurement reference signal. In another embodiment, the common measurement reference signal is a self-defined reference signal set. For example, the network device autonomously configures a group of reference signals as the common measurement reference signal.

In an aspect of the embodiments of the present disclosure, the first indication information may be carried in dedicated RRC, and the network device sends the first indication information based on the dedicated RRC signaling. On the other hand, the first indication information may also be configured to the terminal together with a low-mobility relaxation criterion configuration parameter, and the network device sends the first indication information based on the low-mobility relaxation criterion configuration parameter.

Furthermore, in the embodiments of the present disclosure, the network device sends second indication information, and indicates, through the second indication information, to perform measurement relaxation determination on RRM measurement relaxation and communication link quality monitoring measurement relaxation by using the common measurement reference signal. Among them, the second indication information may be understood as a flag indication configured by the network device, to indicate whether the terminal is allowed to perform determination on RRM and BFD low-mobility measurement relaxation by using the common reference signal.

In an embodiment, the communication link quality monitoring measurement relaxation involved in the above embodiments of the present disclosure includes RLM measurement relaxation and/or BFD measurement relaxation.

In the embodiments of the present disclosure, the network device sends the first indication information to indicate the common measurement reference signal. The terminal receives the first indication information, and performs measurement relaxation determination on RRM measurement relaxation and communication link quality monitoring measurement relaxation based on the common measurement reference signal indicated by the first indication information, so that measurement relaxation determination for determining RRM measurement relaxation and communication link quality monitoring measurement relaxation based on common reference signal quality can be achieved, thus signaling overheads can be reduced, and concise and efficient cooperative measurement can be achieved.

It may be understood that, for the description of the method for communication based on the measurement relaxation mechanism applied to the network device provided by the embodiments of the present disclosure that is not detailed enough, reference may be made to the foregoing related embodiments applied to the terminal, and details are not described here again.

It may be further understood that, the method for communication based on the measurement relaxation mechanism provided in the embodiments of the present disclosure is also applicable to a process of interaction between the terminal and the network device. In the process of interaction between the terminal and the network device to implement measurement relaxation, the terminal and the network device have related descriptions involved in the foregoing embodiments, and details are not described here again.

It should be noted that those skilled in the art may understand that the various embodiments/implementations involved in the embodiments of the present disclosure may be used in conjunction with the foregoing embodiments, or may be used independently. The implementation principles are similar, whether used alone or in conjunction with the foregoing embodiments. In the embodiments of the present disclosure, some embodiments are described in the manner of being used together. Of course, those skilled in the art may understand that such an example is not intended to limit the embodiments of the present disclosure.

Based on the same concept, there is further provided an apparatus for communication based on a measurement relaxation mechanism according to an embodiment of the present disclosure.

It may be understood that, in order to implement the foregoing functions, the apparatus for communication based on the measurement relaxation mechanism provided according to the embodiments of the present disclosure includes corresponding hardware structures and/or software modules for performing the various functions. With reference to the units and algorithm steps of the examples disclosed in the embodiments of the present disclosure, the embodiments of the present disclosure can be implemented in a form of hardware or a combination of hardware and computer software. Whether a function is performed by hardware or hardware driven by computer software depends on particular applications and design constraint conditions of the technical solutions. Those skilled in the art may use different methods to implement the described functions for each particular application, but it should not be considered that the implementation goes beyond the scope of the technical solutions of the embodiments of the present disclosure.

FIG. 7 is a block diagram of an apparatus for communication based on a measurement relaxation mechanism illustrated according to an example embodiment. Referring to FIG. 7, the apparatus 100 for communication based on a measurement relaxation mechanism is applied to a terminal, and includes a processing unit 101.

The processing unit 101 is configured to determine a common measurement reference signal, where the common measurement reference signal is a reference signal commonly used for RRM measurement relaxation and communication link quality monitoring measurement relaxation, and perform measurement relaxation determination on RRM measurement relaxation and communication link quality monitoring measurement relaxation based on the common measurement reference signal.

In an embodiment, in response to using a same type of reference signal for RRM measurement relaxation and communication link quality monitoring measurement relaxation, the processing unit 101 uses a reference signal with a same signal index in the same type of reference signal as the common measurement reference signal.

In an embodiment, using the same type of reference signal for RRM measurement relaxation and communication link quality monitoring measurement relaxation, includes at least one of the following: using an SSB for RRM measurement relaxation, and using an SSB for communication link quality monitoring measurement relaxation; using a CSI-RS for RRM measurement relaxation, and using a CSI-RS for communication link quality monitoring measurement relaxation; or, using an SSB or a CSI-RS for RRM measurement relaxation, and using an SSB and a CSI-RS for communication link quality monitoring measurement relaxation.

In an embodiment, in response to using an SSB for RRM measurement relaxation and using an SSB for communication link quality monitoring measurement relaxation, the processing unit 101 performs measurement relaxation determination on RRM measurement relaxation and communication link quality monitoring measurement relaxation based on an SSB with a same SSB index.

In an embodiment, in response to using a CSI-RS for RRM measurement relaxation, and using a CSI-RS for communication link quality monitoring measurement relaxation, the processing unit 101 performs measurement relaxation determination on RRM measurement relaxation and communication link quality monitoring measurement relaxation based on a CSI-RS with a same CSI-RS index.

In an embodiment, in response to using an SSB for RRM measurement relaxation, and using an SSB and a CSI-RS for communication link quality monitoring measurement relaxation, the processing unit 101 performs measurement relaxation determination on RRM measurement relaxation based on an SSB with a same SSB index, and performs measurement relaxation determination on communication link quality monitoring measurement relaxation based on the CSI-RS and the SSB with the same SSB index; or

In response to using a CSI-RS for RRM measurement relaxation, and using an SSB and a CSI-RS for communication link quality monitoring measurement relaxation, the processing unit 101 performs measurement relaxation determination on RRM measurement relaxation based on a CSI-RS with a same SSB index, and performs measurement relaxation determination on communication link quality monitoring measurement relaxation based on the SSB and the CSI-RS with the same CSI-RS index.

In an embodiment, the apparatus 100 further includes a receiving unit 102, configured to receive first indication information sent by a network device, where the first indication information is used to indicate the common measurement reference signal; and the processing unit 101 determines the common measurement reference signal based on the first indication information.

In an embodiment, the common measurement reference signal is determined based on an intersection between a reference signal set configured and used for RRM measurement relaxation and a reference signal set configured and used for communication link quality monitoring measurement relaxation; or, the common measurement reference signal is a self-defined reference signal set.

In an embodiment, the receiving unit 102 receives the first indication information sent by the network device based on dedicated RRC signaling; or the receiving unit 102 receives the first indication information sent by the network device based on a low-mobility relaxation criterion configuration parameter.

In an embodiment, the apparatus 100 further includes a receiving unit 102; and the receiving unit 102 is configured to receive second indication information, where the second indication information is used to indicate performing measurement relaxation determination on RRM measurement relaxation and communication link quality monitoring measurement relaxation by using the common measurement reference signal.

In an embodiment, communication link quality monitoring measurement relaxation includes RLM measurement relaxation and/or beam failure detection BFD measurement relaxation.

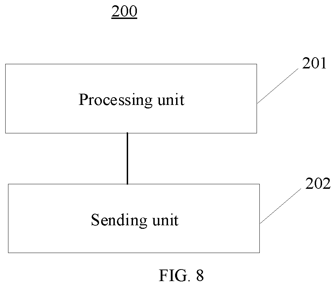

FIG. 8 is a block diagram of an apparatus for communication based on a measurement relaxation mechanism illustrated according to an example embodiment. Referring to FIG. 8, the apparatus 200 for communication based on a measurement relaxation mechanism is applied to a network device, and includes a processing unit 201 and a sending unit 202.

The processing unit 201 is configured to determine a common measurement reference signal, where the common measurement reference signal is a reference signal commonly used for RRM measurement relaxation and communication link quality monitoring measurement relaxation. The sending unit 202 is configured to send first indication information, where the first indication information is used to indicate the common measurement reference signal.

In an embodiment, the common measurement reference signal is determined based on an intersection between a reference signal set configured and used for RRM measurement relaxation and a reference signal set configured and used for communication link quality monitoring measurement relaxation; or, the common measurement reference signal is a self-defined reference signal set.

In an embodiment, the sending unit 202 sends the first indication information based on dedicated RRC signaling, or sends the first indication information based on a low-mobility relaxation criterion configuration parameter.

In an embodiment, the sending unit 202 is further configured to send second indication information, where the second indication information is used to indicate performing measurement relaxation determination on RRM measurement relaxation and communication link quality monitoring measurement relaxation by using the common measurement reference signal.

In an embodiment, communication link quality monitoring measurement relaxation includes RLM measurement relaxation and/or BFD measurement relaxation.

With respect to the apparatus in the above embodiments, the specific manner in which each module performs an operation has been described in detail in the embodiments related to the method, which will not be described in detail here.

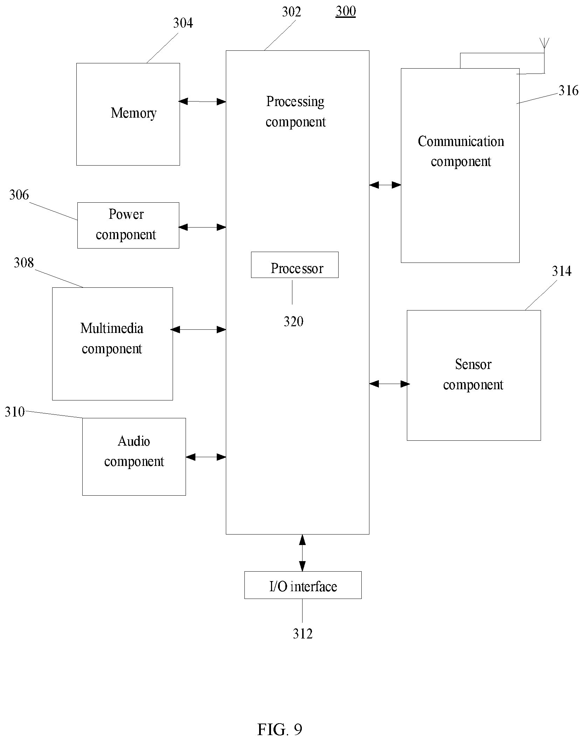

FIG. 9 is a block diagram of an apparatus 300 for communication based on a measurement relaxation mechanism illustrated according to an example embodiment. The apparatus 300 for communication based on the measurement relaxation mechanism may be provided as a terminal. For example, the apparatus 300 may be a mobile phone, a computer, a digital broadcast terminal, a message transceiving device, a game console, a tablet device, a medical device, a gym device, a personal digital assistant, etc.

Referring to FIG. 9, the apparatus 300 may include one or more of following components: a processing component 302, a memory 304, a power component 306, a multimedia component 308, an audio component 310, an input/output (I/O) interface 312, a sensor component 314, and a communication component 316.

The processing component 302 generally controls the overall operation of the apparatus 300, such as operations associated with display, telephone calls, data communications, camera operations, and recording operations. The processing component 302 may include one or more processors 320 to execute instructions to complete all or part of the steps of the methods described above. In addition, the processing component 302 may include one or more modules to facilitate interaction between the processing component 302 and other components. For example, the processing component 302 may include a multimedia module to facilitate interaction between the multimedia component 308 and the processing component 302.

The memory 304 is configured to store various types of data to support operations at the apparatus 300. Examples of such data include instructions for any application or method operating on the apparatus 300, contact data, phonebook data, messages, pictures, videos, or the like. The memory 304 may be implemented by any type of volatile or non-volatile storage device or a combination of them, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 306 provides power to various components of the apparatus 300. The power component 306 may include a power management system, one or more power sources, and other components associated with generating, managing, and distributing power for the apparatus 300.

The multimedia component 308 includes a screen providing an output interface between the apparatus 300 and a user. In some embodiments, the screen may include a liquid crystal display (LCD) and a touch panel (TP). If the screen includes a touch panel, the screen may be implemented as a touch screen to receive an input signal from a user. The touch panel includes one or more touch sensors to sense touching, sliding, and gestures on the touch panel. The touch sensor may not only sense a boundary of a touching or sliding action, but also detect a duration and pressure associated with the touching or sliding action. In some embodiments, the multimedia component 308 includes a front-facing camera and/or a rear-facing camera. When the apparatus 300 is in an operation mode, such as a photographing mode or a video mode, the front-facing camera and/or the rear-facing camera may receive external multimedia data. Each of the front-facing camera and the rear-facing camera may be a fixed optical lens system, or may have a focal length and an optical zoom capability.

The audio component 310 is configured to output and/or input an audio signal. For example, the audio component 310 includes a microphone (MIC) configured to receive an external audio signal when the apparatus 300 is in an operating mode, such as a call mode, a recording mode, and a speech recognition mode. The received audio signal may be further stored in the memory 304 or be sent via the communication component 316. In some embodiments, the audio component 310 further includes a speaker configured to output an audio signal.

The I/O interface 312 provides an interface between the processing component 302 and a peripheral interface module, and the peripheral interface module may be a keyboard, a click wheel, a button, or the like. The button may include, but is not limited to, a home button, a volume button, a start button, and a lock button.

The sensor component 314 includes one or more sensors for providing status assessments for various aspects of the apparatus 300. For example, the sensor component 314 may detect the open/closed state of the apparatus 300, and the relative positioning of the components; for example, these components may be the display and the keypad of the apparatus 300. The sensor component 314 may also detect the position change of the apparatus 300 or a component of the apparatus 300, the presence or absence of contact between the user and the apparatus 300, the orientation or the acceleration/deceleration of the apparatus 300, and the temperature change of the apparatus 300. The sensor component 314 may include a proximity sensor configured to detect the presence of nearby objects without any physical contact. The sensor component 314 may also include an optical sensor, such as a CMOS or CCD image sensor, for use in an imaging application. In some embodiments, the sensor component 314 may further include an acceleration sensor, a gyroscope sensor, a magnetic sensor, a pressure sensor, or a temperature sensor.

The communication component 316 is configured to facilitate wired or wireless communication between the apparatus 300 and other devices. The apparatus 300 may access a wireless network based on a communication standard, such as WiFi, 4G or 5G, or a combination of them. In an example embodiment, the communication component 316 receives broadcast signals or broadcast related information from an external broadcast management system via a broadcast channel. In an example embodiment, the communication component 316 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an example embodiment, the apparatus 300 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the methods described above.

In an example embodiment, there is further provided a non-transitory computer-readable storage medium including an instruction, such as a memory 304 including an instruction. The instruction may be executed by the processor 320 of the apparatus 300 to complete the above method. For example, the non-transitory computer-readable storage medium may be a ROM, a random access memory (RAM), a CD-ROM, a magnetic tape, a floppy disk, an optical data storage device, etc.

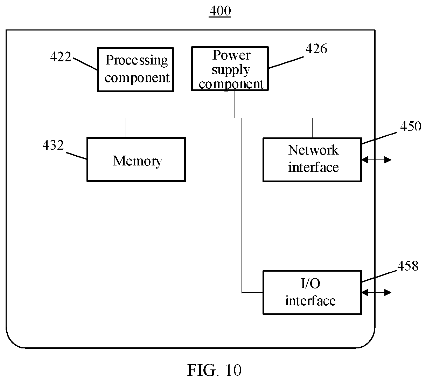

FIG. 10 is a block diagram of an apparatus 400 for communication based on a measurement relaxation mechanism illustrated according to an example embodiment. For example, the apparatus 400 may be provided as a network device. Referring to FIG. 10, the apparatus 400 includes a processing component 422 that further includes one or more processors, and memory resources represented by the memory 432 for storing instructions, such as applications, that may be executed by the processing component 422. The applications stored in the memory 432 may include one or more modules, each of which corresponding to a set of instructions. In addition, the processing component 422 is configured to execute the instructions to perform the above method.

The apparatus 400 may also include a power supply component 426 configured to perform power supply management of the apparatus 400, a wired or wireless network interface 450 configured to connect the apparatus 400 to a network, and an input/output (I/O) interface 458. The apparatus 400 may operate based on an operating system stored in the memory 432, such as Windows ServerTM, Mac OS XTM, UnixTM, LinuxTM, FreeBSDTM, etc.

In an example embodiment, the apparatus 400 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components, for performing the methods described above

In an example embodiment, there is further provided a non-transitory computer-readable storage medium including an instruction, such as a memory 432 including an instruction. The instruction may be executed by the processing component 422 of the apparatus 400 to complete the above method. For example, the non-transitory computer-readable storage medium may be a ROM, a random access memory (RAM), a CD-ROM, a magnetic tape, a floppy disk, an optical data storage device, etc.

It may be further understood that "more than one " in the present disclosure refers to two or more, and other quantifiers are similar to it. "And/or" describes an association relationship of the associated objects, indicating that there may be three types of relationships. For example, A and/or B may indicate three conditions that A exists alone, A and B exist simultaneously, and B exists alone. The character "/" generally indicates an "or" relationship between the associated objects before and after. The singular forms "a", "said" and "the" are intended to include the plural forms as well, unless the context clearly indicates other meanings.

It can be further understood that the terms "first", "second" or the like are used to describe various information, but the information should not be limited to these terms. These terms are only used to distinguish the same type of information from each other, and do not indicate a specific order or importance degree. In fact, expressions such as "first" and "second" can be used interchangeably. For example, without departing from the scope of the present disclosure, the first information may also be referred to as second information, and similarly, the second information may also be referred to as first information.

It should be further understood that, in the embodiments of the present disclosure, although operations are described in a specific order in the accompanying drawings, it should not be understood as requiring that these operations should be performed in the specific order shown or in a serial order, or that all the operations shown should be performed to obtain a desired result. In a particular environment, multitasking and parallel processing may be advantageous.

Other embodiments of the present disclosure will be apparent to those skilled in the art from consideration of the description and practice of the invention disclosed here. The present application is intended to cover any variations, uses, or adaptations of the present disclosure following the general principles of the present disclosure and including common knowledge or conventional technical means in the art that is not disclosed in the present disclosure.

It will be appreciated that the present disclosure is not limited to the precise structures that have been described above and shown in the accompanying drawings, and various modifications and changes may be made without departing from the scope of the present disclosure. The scope of the present disclosure is limited only by the appended claims.

## Claims

1. A method for communication based on a measurement relaxation mechanism, applied to a terminal, and comprising:
determining a common measurement reference signal, wherein the common measurement reference signal is a reference signal commonly used for radio resource management (RRM) measurement relaxation and communication link quality monitoring measurement relaxation; and
performing measurement relaxation determination on the RRM measurement relaxation and the communication link quality monitoring measurement relaxation based on the common measurement reference signal.

2. The method for communication based on the measurement relaxation mechanism according to claim 1, wherein determining the common measurement reference signal comprises:
using, in response to using a same type of reference signal for the RRM measurement relaxation and the communication link quality monitoring measurement relaxation, a reference signal with a same signal index in the same type of reference signal as the common measurement reference signal.

3. The method for communication based on the measurement relaxation mechanism according to claim 2, wherein using the same type of reference signal for the RRM measurement relaxation and the communication link quality monitoring measurement relaxation, comprises at least one of:
using a synchronization signal block for the RRM measurement relaxation, and using a synchronization signal block for the communication link quality monitoring measurement relaxation;
using a channel state information reference signal for the RRM measurement relaxation, and using a channel state information reference signal for the communication link quality monitoring measurement relaxation; or
using a synchronization signal block or a channel state information reference signal for the RRM measurement relaxation, and using a synchronization signal block and a channel state information reference signal for the communication link quality monitoring measurement relaxation.

4. The method for communication based on the measurement relaxation mechanism according to claim 3, wherein performing measurement relaxation determination on the RRM measurement relaxation and the communication link quality monitoring measurement relaxation based on the common measurement reference signal, comprises:
performing, in response to using a synchronization signal block for the RRM measurement relaxation and using a synchronization signal block for the communication link quality monitoring measurement relaxation, measurement relaxation determination on the RRM measurement relaxation and the communication link quality monitoring measurement relaxation based on a synchronization signal block with a same synchronization signal block index.

5. The method for communication based on the measurement relaxation mechanism according to claim 3, wherein performing measurement relaxation determination on the RRM measurement relaxation and the communication link quality monitoring measurement relaxation based on the common measurement reference signal, comprises:
performing, in response to using a channel state information reference signal for the RRM measurement relaxation and using a channel state information reference signal for the communication link quality monitoring measurement relaxation, measurement relaxation determination on the RRM measurement relaxation and the communication link quality monitoring measurement relaxation based on a channel state information reference signal with a same channel state information reference signal index.

6. The method for communication based on the measurement relaxation mechanism according to claim 3, wherein performing measurement relaxation determination on the RRM measurement relaxation and the communication link quality monitoring measurement relaxation based on the common measurement reference signal, comprises:
performing, in response to using a synchronization signal block for the RRM measurement relaxation and using a synchronization signal block and a channel state information reference signal for the communication link quality monitoring measurement relaxation, measurement relaxation determination on the RRM measurement relaxation based on a synchronization signal block with a same synchronization signal block index, and performing measurement relaxation determination on the communication link quality monitoring measurement relaxation based on the channel state information reference signal and the synchronization signal block with the same synchronization signal block index; or
performing, in response to using a channel state information reference signal for the RRM measurement relaxation and using a synchronization signal block and a channel state information reference signal for the communication link quality monitoring measurement relaxation, measurement relaxation determination on the RRM measurement relaxation based on a channel state information reference signal with a same synchronization signal block index, and performing measurement relaxation determination on the communication link quality monitoring measurement relaxation based on the synchronization signal block and the channel state information reference signal with the same channel state information reference signal index.

7. The method for communication based on the measurement relaxation mechanism according to claim 1, wherein determining the common measurement reference signal, comprises:
receiving first indication information sent by a network device, wherein the first indication information is used to indicate the common measurement reference signal.

8. The method for communication based on the measurement relaxation mechanism according to claim 7, wherein the common measurement reference signal is determined based on an intersection between a reference signal set configured and used for the RRM measurement relaxation and a reference signal set configured and used for the communication link quality monitoring measurement relaxation; or
the common measurement reference signal is a self-defined reference signal set.

9. The method for communication based on the measurement relaxation mechanism according to claim 7 or 8, wherein receiving the first indication information sent by the network device, comprises:
receiving the first indication information sent by the network device based on dedicated radio resource control signaling; or
receiving the first indication information sent by the network device based on a low-mobility relaxation criterion configuration parameter.

10. The method for communication based on the measurement relaxation mechanism according to any one of claims 1 to 9, further comprising:
receiving second indication information, wherein the second indication information is used to indicate performing measurement relaxation determination on the RRM measurement relaxation and the communication link quality monitoring measurement relaxation by using the common measurement reference signal.

11. The method for communication based on the measurement relaxation mechanism according to any one of claims 1 to 10, wherein the communication link quality monitoring measurement relaxation comprises RLM measurement relaxation and/or beam failure detection (BFD) measurement relaxation.

12. A method for communication based on a measurement relaxation mechanism, applied to a network device, and comprising:
determining a common measurement reference signal, wherein the common measurement reference signal is a reference signal commonly used for radio resource management (RRM) measurement relaxation and communication link quality monitoring measurement relaxation; and
sending first indication information, wherein the first indication information is used to indicate the common measurement reference signal.

13. The method for communication based on the measurement relaxation mechanism according to claim 12, wherein the common measurement reference signal is determined based on an intersection between a reference signal set configured and used for the RRM measurement relaxation and a reference signal set configured and used for the communication link quality monitoring measurement relaxation; or
the common measurement reference signal is a self-defined reference signal set.

14. The method for communication based on the measurement relaxation mechanism according to claim 12 or 13, wherein sending the first indication information, comprises:
sending the first indication information based on dedicated radio resource control signaling; or
sending the first indication information based on a low-mobility relaxation criterion configuration parameter.

15. The method for communication based on the measurement relaxation mechanism according to any one of claims 12 to 14, further comprising:
sending second indication information, wherein the second indication information is used to indicate performing measurement relaxation determination on the RRM measurement relaxation and the communication link quality monitoring measurement relaxation by using the common measurement reference signal.

16. The method for communication based on the measurement relaxation mechanism according to any one of claims 12 to 15, wherein the communication link quality monitoring measurement relaxation comprises RLM measurement relaxation and/or beam failure detection (BFD) measurement relaxation.

17. An apparatus for communication based on a measurement relaxation mechanism, comprising:
a processing unit, configured to determine a common measurement reference signal, wherein the common measurement reference signal is a reference signal commonly used for radio resource management (RRM) measurement relaxation and communication link quality monitoring measurement relaxation, and perform measurement relaxation determination on the RRM measurement relaxation and the communication link quality monitoring measurement relaxation based on the common measurement reference signal.

18. The apparatus for communication based on the measurement relaxation mechanism according to claim 17, wherein the processing unit is configured to, in response to using a same type of reference signal for the RRM measurement relaxation and the communication link quality monitoring measurement relaxation, use a reference signal with a same signal index in the same type of reference signal as the common measurement reference signal.

19. The apparatus for communication based on the measurement relaxation mechanism according to claim 17, wherein the apparatus further comprises a receiving unit;
the receiving unit is configured to receive first indication information sent by a network device, wherein the first indication information is used to indicate the common measurement reference signal; and
the processing unit is configured to determine the common measurement reference signal based on the first indication information.

20. An apparatus for communication based on a measurement relaxation mechanism, comprising:
a processing unit, configured to determine a common measurement reference signal, wherein the common measurement reference signal is a reference signal commonly used for radio resource management (RRM) measurement relaxation and communication link quality monitoring measurement relaxation; and
a sending unit, configured to send first indication information, wherein the first indication information is used to indicate the common measurement reference signal.

21. An apparatus for communication based on a measurement relaxation mechanism, comprising:
a processor; and
a memory, configured to store an instruction executable by the processor;
wherein the processor is configured to perform the method for communication based on the measurement relaxation mechanism according to any one of claims 1 to 11.

22. An apparatus for communication based on a measurement relaxation mechanism, comprising:
a processor; and
a memory, configured to store an instruction executable by the processor;
wherein the processor is configured to perform the method for communication based on the measurement relaxation mechanism according to any one of claims 12 to 16.

23. A storage medium, wherein the storage medium stores an instruction, and when the instruction in the storage medium is executed by a processor of a terminal, the terminal is enabled to perform the method for communication based on the measurement relaxation mechanism according to any one of claims 1 to 11.

24. A storage medium, wherein the storage medium stores an instruction, and when the instruction in the storage medium is executed by a processor of a network device, the network device is enabled to perform the method for communication based on the measurement relaxation mechanism according to any one of claims 12 to 16.
